# EUROPEAN PATENT SPECIFICATION

(11) **EP 3 741 688 B1**
(45) Date of publication and mention of the grant of the patent: **09.12.2026**
(21) Application number: 20176054.3
(22) Date of filing: 22.05.2020
(51) Int. Cl.: B65B 3/28, B65B 43/52, B65G 54/02

(54) **FILLING MACHINE FOR FILLING BOTTLES IN PARTICULAR FOR PHARMACEUTICAL PRODUCTS**
FÜLLMASCHINE ZUM FÜLLEN VON FLASCHEN, INSBESONDERE FÜR PHARMAZEUTISCHE PRODUKTE
MACHINE DE REMPLISSAGE POUR REMPLIR DES BOUTEILLES EN PARTICULIER POUR LES PRODUITS PHARMACEUTIQUES

(30) Priority: 23.05.2019 IT 201900007152
(43) Date of publication of application: 25.11.2020
(73) Proprietor: G.D SOCIETA' PER AZIONI, 40133 Bologna (IT)
(72) Inventor: TESTONI, Luca, 40133 BOLOGNA (IT); DEGLIESPOSTI, Paolo, 40133 BOLOGNA (IT); GAUDENZI, Fabio, 40133 BOLOGNA (IT); FEDERICI, Luca, deceased (IT)
(74) Representative: Studio Torta S.p.A.

(56) References cited:
- EP-A1- 2 420 450
- EP-A1- 3 045 399
- WO-A1-2017/158572
- DE-A1- 10 356 073
- DE-A1- 102014 214 693
- DE-A1- 102017 102 914

## Description

### CROSS-REFERENCE TO RELATED APPLICATIONS

This patent application claims priority from Italian patent application no. 102019000007152 filed on 23/05/2019.

### TECHNICAL FIELD

This invention relates to a filling machine to fill bottles (i.e. bottles, flasks, or containers more generally).

This invention is advantageously applied to filling bottles for products of the pharmaceutical industry, to which the following discussion explicitly refers without any loss of generality thereby.

### PRIOR ART

A filling machine to fill bottles for products of the pharmaceutical industry, for example medicines, comprises a conveyor system (typically consisting of several conveyors arranged in series one after the other) that moves a succession of bottles through a weighing station for empty bottles; through a filling station where a predetermined quantity of liquid or powder product is fed into each bottle; through a weighing station for full bottles; through a closing station where each bottle is fitted with a respective cap; possibly through a sealing station (ring-sealing) where each bottle is fitted with a plastic coating surrounding the cap; and finally through a labelling station where at least one, more-or-less customised label is applied to each bottle.

Patent application EP2420450A1 describes a filling machine to fill a container with a product, in particular a medication, in aseptic conditions and comprising transport means to move the container through a series of processing stations. The transport means comprise an annular guide that is arranged in a fixed position, a plurality of trolleys that run along the annular guide, and a linear electric motor that moves the trolleys along the annular guide.

### DESCRIPTION OF THE INVENTION

The purpose of this invention is to provide a filling machine to fill bottles, in particular for products of the pharmaceutical industry, which makes it possible to reach higher hourly productivity than known packaging machines and is, at the same time, easy and economical to construct.

In accordance with this invention, a filling machine to fill bottles, in particular for products of the pharmaceutical industry, is provided, as claimed in the attached claims.

The dependent claims describe preferred embodiments of this invention, forming an integral part of this description.

### BRIEF DESCRIPTION OF THE DRAWINGS

This invention will now be described with reference to the accompanying drawings, which illustrate a non-limiting embodiment thereof, wherein:
- Figure 1 is a schematic view of a bottle for products of the pharmaceutical industry;
- Figure 2 is a schematic and plan view of a filling machine to fill bottles of the type illustrated in Figure 1;
- Figure 3 is an enlarged-scale view of a detail in Figure 2;
- Figure 4 is a schematic perspective view of part of a filling conveyor of the filling machine in Figure 2; and
- Figure 5 is an additional, enlarged-scale view of a detail in Figure 2.

### PREFERRED EMBODIMENTS OF THE INVENTION

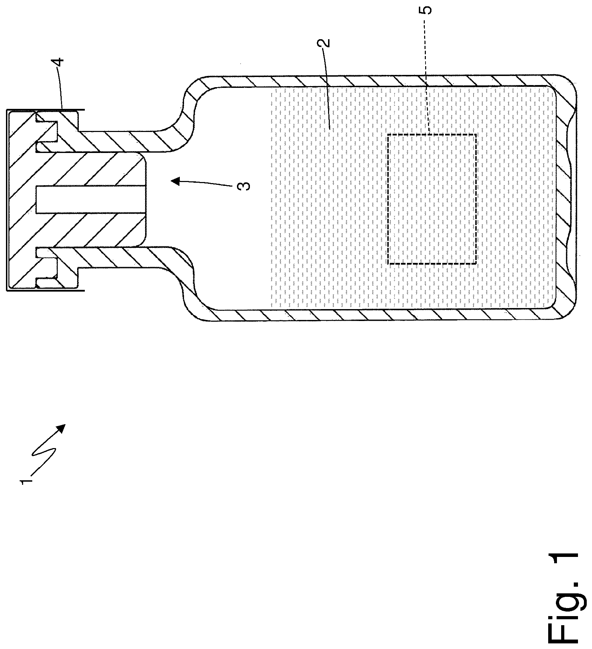

In Figure 1, the reference number 1 denotes, as a whole, a bottle (bottle, flask, or container more generally), for example a single-use one (i.e. a disposable one that, therefore, is only used once and is then replaced) of the kind known for containing a product 2 of the pharmaceutical industry (typically a liquid). The bottle 1 is closed by means of a cap 3 that is covered in a plastic coating 4 that must be removed in order to take off the cap 3. In addition, the bottle 1 is provided with (at least) one label 5 that is glued to an outside surface of the bottle 1.

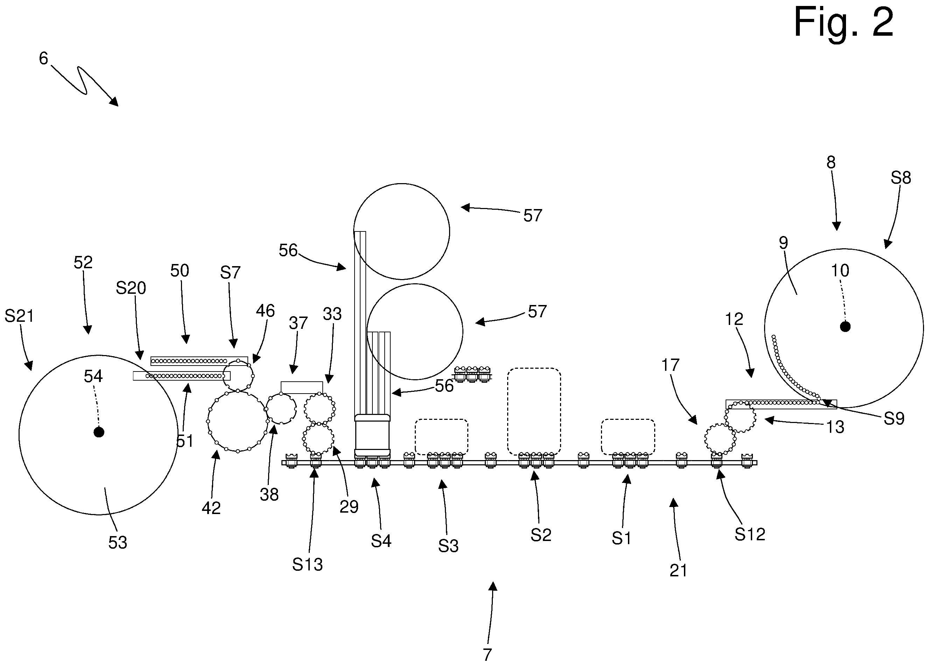

In Figure 2, the reference number 6 denotes, as a whole, a filling machine to fill bottles 1 of the type illustrated in Figure 1.

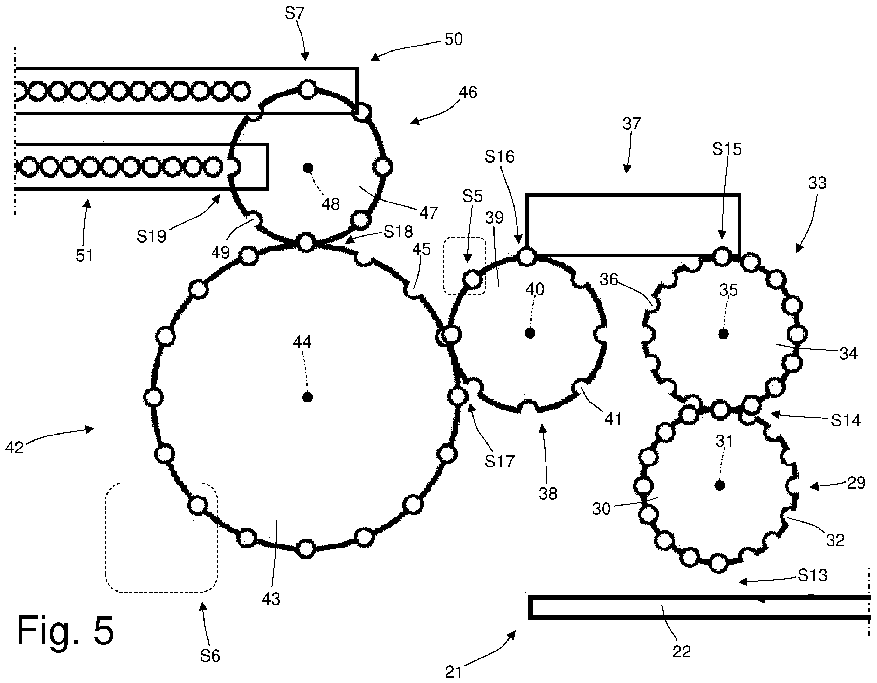

The filling machine 6 comprises a conveyor system 7 (consisting of several conveyors arranged in a series one after the other, as will be better described below) that moves a succession of bottles 1 along a processing path and through a plurality of processing stations (better described below): a weighing station S1 for empty bottles 1; a filling station S2 where a predetermined quantity of liquid product 2 is fed into each bottle 1; a weighing station S3 for full bottles 1; a closing station S4 where each bottle 1 is equipped with a respective cap 2; a labelling station S5 (illustrated in Figure 5) where at least one more-or-less customised label 5 is applied to each bottle 1; through a sealing station S6 (ring-sealing, illustrated in Figure 5) where each bottle 1 is equipped with a plastic coating 4 that surrounds the cap 2; and, finally, through a rejection station S7 where the faulty bottles 1 are eliminated.

The conveyor system 7 comprises an inlet conveyor 8 that constitutes the inlet of the filling machine 6 and is provided with a horizontal drum 9 mounted so that it can rotate about a vertical rotation axis 10. At an inlet station S8, a succession of empty bottles 1 enters the drum 9 and the empty bottles 1 exit the drum 9 at a transfer station S9.

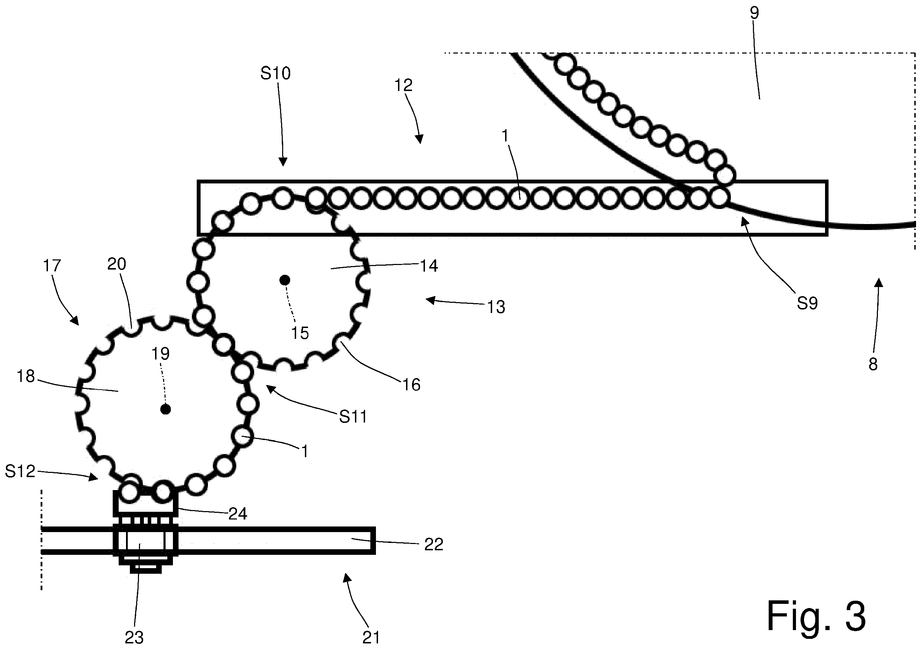

As illustrated in Figure 3, the conveyor system 7 comprises a transfer conveyor 12 of the linear kind that receives the empty bottles 1 at the transfer station S9 from the inlet conveyor 8 and moves the empty bottles 1 along a linear, horizontal path towards a transfer station S10 where the empty bottles 1 leave the transfer conveyor 12. The transfer conveyor 12 could consist of a simple static channel (i.e. without any moving parts) along which the bottles 1 are pushed as new bottles 1 enter the transfer conveyor 12 at the transfer station S9.

The conveyor system 7 comprises a transfer conveyor 13 that is provided with a horizontal drum 14 mounted so that it can rotate about a vertical rotation axis 15 and equipped with a plurality of peripheral pockets 16 each of which is designed to house an empty bottle 1. The rotation of the horizontal drum 14 about the rotation axis 15 cyclically moves each pocket 16 along a circular, horizontal path between the transfer station S10, where a succession of empty bottles 1 is inserted in respective pockets 16, and a transfer station S11, where the empty bottles 1 are extracted from the pockets 16.

The conveyor system 7 comprises an insertion conveyor 17 that is provided with a horizontal drum 18 mounted so that it can rotate about a vertical rotation axis 19 and equipped with a plurality of peripheral pockets 20 each of which is designed to house an empty bottle 1. The rotation of the horizontal drum 18 about the rotation axis 19 cyclically moves each pocket 20 along a circular, horizontal path between the transfer station S11, where a succession of empty bottles 1 is inserted into respective pockets 20, and an insertion station S12, where the empty bottles 1 are extracted from the pockets 20.

As shown in Figure 2, the conveyor system 7 comprises a filling conveyor 21 that receives the empty bottles 1 at the insertion station S12, moves the bottles 1 through the weighing station S1 for the empty bottles 1, through the filling station S2, through the weighing station S3 for full bottles 1, and through the closing station S4, until reaching a removal station S13 where the full bottles 1 leave the filling conveyor 21.

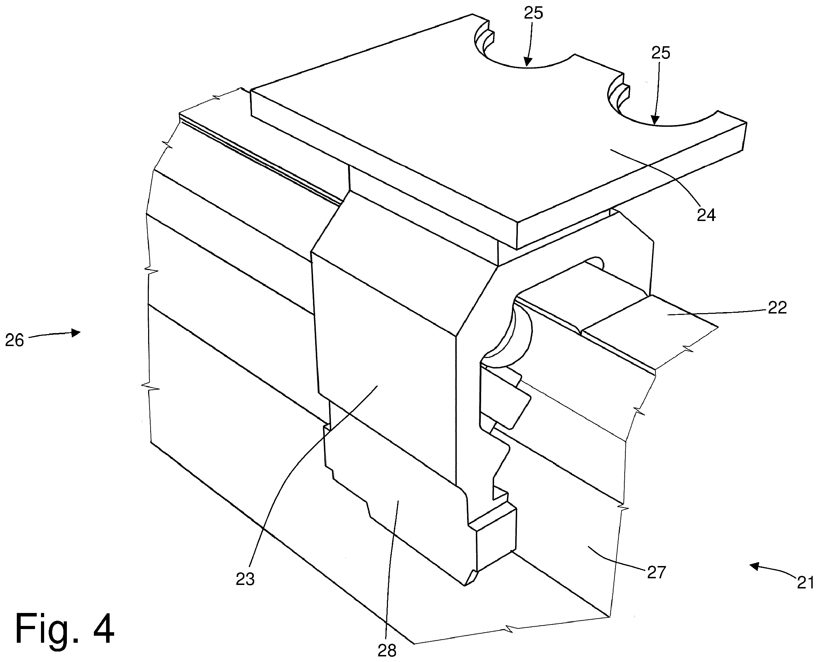

As shown in Figure 4, the filling conveyor 21 comprises an annular guide 22 (i.e. closed in on itself like a ring) that is arranged in a fixed position along the processing path (and, thus, through the stations S12, S1-S4, and S13); in particular, the annular guide 22 consists of a single fixed track (i.e. that does not move) that is arranged along the processing path. In addition, the filling conveyor 21 comprises a plurality of slides 23 (just one of which is illustrated in Figure 4), each of which supports, overhanging, a corresponding moveable plate 24 and is coupled to the guide 22 to freely slide along the guide 22. Each moveable plate 24 supports a pair of pockets 25 that are arranged close to each other, one next to the other; each pocket 25 is designed to hold a corresponding bottle (for example, each pocket 25 could consist of a cylindrical hole vertically oriented inside of which a bottle 1 is inserted). Finally, the filling conveyor 21 comprises a linear electric motor 26, which moves the slides 23 carrying the moveable plates 24 along the processing path; the linear electric motor 26 comprises an annular stator 27 (i.e. a fixed primary one), which is arranged in a fixed position along the guide 22 and a plurality of movable sliders 28 (i.e. moveable secondary ones), each electrically-magnetically coupled to the stator 27 so as to receive, from the stator 27, a driving force and being rigidly connected to a corresponding slide 23.

The stator 27 of the linear electric motor 26 comprises a ferromagnetic armature having a series of cavities housing the windings designed to be run through by variable electric currents in time to generate corresponding stator magnetic fields (variable in time); each slider 28 of the linear electric motor 26 comprises a ferromagnetic armature in which at least one permanent magnet is arranged that generates a rotor magnetic field (constant over time) that interacts with the stator magnetic field to generate an electromagnetic driving force on the slider 28. In each slide 23, the slider 28 is mounted so as to be in close proximity (approximately 1-2 mm) with the stator 27 to minimise the gap between the ferromagnetic armature of the slider 28 and the ferromagnetic armature of the stator 27.

There is a control device that drives the linear electric motor 26, applying a variable voltage to the windings of the stator 27. The control device preferably uses a closed-chain control system (i.e. in feedback) to control the position of each slider 28 (thus, of each slide 23). Consequently, the control device must know, in real time and with good accuracy, the actual position of each slider 28 (thus of each slide 23) along the processing path. To this end, the control device can reconstruct the actual position of each slider 28 along the processing path using estimate algorithms based on electric signals present at the ends of the windings of the stator 27 or the control device can receive the detection of a special position sensor that is arranged along the processing path. For example, the position sensor comprises a measuring ring made of magnetostrictive material that is arranged along the processing path and, for each slider 28, a corresponding permanent magnet that is arranged near the measuring ring.

As shown in Figure 2, and according to a preferred embodiment, the filling station S2 is designed to operate at the same time as the pockets 25 of three slides 23 beside each other, i.e. the filling station S2 is designed to fill, at the same time, six bottles 1 carried by six pockets 25 of three slides 23 beside each other. Thus, the filling station S2 is designed to fill, at the same time, several bottles 1 at a time, and, in particular, is designed to fill, at the same time, six bottles 1 at a time that are carried by six pockets 25 of three slides 23 beside each other.

Similarly, according to a preferred embodiment, both the weighing stations S1 and S3 are designed to operate at the same time as the pockets 25 of three slides 23 beside each other, i.e. the weighing stations S1 and S3 are designed to weigh, at the same time, six bottles 1 carried by six pockets 25 of three slides 23 beside each other. Thus, each weighing station S1 or S3 is designed to weigh, at the same time, several bottles 1 at a time, and, in particular, is designed to weigh, at the same time, six bottles 1 at a time that are carried by six pockets 25 of three slides 23 beside each other.

Similarly, according to a preferred embodiment, the closing station S4 is designed to operate at the same time as the pockets 25 of three slides 23 beside each other, i.e. the closing station S4 is designed to apply, at the same time, the caps 3 to six bottles 1 carried by six pockets 25 of three slides 23 beside each other. Thus, the closing station S4 is designed to apply the caps 3 at the same time to several bottles 1 at a time, and, in particular, is designed to apply the caps 3 at the same time to six bottles 1 at a time that are carried by six pockets 25 of three slides 23 beside each other.

As a result, the filling conveyor 21 accumulates three slides 23 upstream of each station S1-S4 placing the three slides 23 side-by-side and, thus, moves the three slides 23 together, side-by-side, through the station S1-S4. In other words, upstream of each station S1-S4, a waiting zone is provided where groups of three slides 23 are formed to successively move each group of three slides 23 through the station S1-S4. Thus, the first slide 23 of a group of three stops in the waiting zone of each station S1-S4 to wait for the second and third slide 23 of the same group of three, and only once the group of three slides 23 has been formed in the waiting zone, the group of three slide 23 is moved (with the three slides 23 kept side-by-side) through the station S1-S4.

According to a preferred embodiment, once a group of three slides 23 is formed upstream of the weighing station S1, the same group of three slides 23 is maintained and is moved together through the other stations S2-S4.

As illustrated in Figure 5, the conveyor system 7 comprises a removal conveyor 29 that is provided with a horizontal drum 30 mounted so that it can rotate about a vertical rotation axis 31 and equipped with a plurality of peripheral pockets 32 each of which is designed to house an full bottle 1. The rotation of the horizontal drum 30 about the rotation axis 31 cyclically moves each pocket 32 along a circular, horizontal path between the removal station S13, where the full bottles 1 are extracted from the pockets 25 of the filling conveyor 21 and are inserted into the pockets 32, and a transfer station S14, where the full bottles 1 are extracted from the pockets 32.

The conveyor system 7 comprises a transfer conveyor 33 that is provided with a horizontal drum 34 mounted so that it can rotate about a vertical rotation axis 35 and equipped with a plurality of peripheral pockets 36 each of which is designed to house a full bottle 1. The rotation of the horizontal drum 34 about the rotation axis 35 cyclically moves each pocket 36 along a circular, horizontal path between the transfer station S14 where the full bottles 1 are inserted into the pockets 36 and a transfer station S15 where the full bottles 1 are extracted from the pockets 36.

The conveyor system 7 comprises a transfer conveyor 37 of the linear kind that receives the full bottles 1 in the transfer station S15 from the pockets 36 of the transfer conveyor 33 and moves the full bottles 1 along a linear, horizontal path towards a transfer station S16 where the full bottles 1 leave the transfer conveyor 37. The transfer conveyor 37 could consist of a simple static channel (i.e. without any moving parts) along which the bottles 1 are pushed as new bottles 1 enter the transfer conveyor 37 at the transfer station S15.

The conveyor system 7 comprises a labelling conveyor 38 that is provided with a horizontal drum 39 mounted so that it can rotate about a vertical rotation axis 40 and equipped with a plurality of peripheral pockets 41 each of which is designed to house a full bottle 1. The rotation of the horizontal drum 39 about the rotation axis 40 cyclically moves each pocket 41 along a circular, horizontal path between the transfer station S16 where the full bottles 1 are inserted into respective pockets 41, the labelling station S5, and a transfer station S17 where the full, labelled bottles 1 are extracted from the pockets 41.

The conveyor system 7 comprises a sealing conveyor 42 that is provided with a horizontal drum 43 mounted so that it can rotate about a vertical rotation axis 44 and equipped with a plurality of peripheral pockets 45 each of which is designed to house a full bottle 1. The rotation of the horizontal drum 43 about the rotation axis 44 cyclically moves each pocket 45 along a circular, horizontal path between the transfer station S17 where the full bottles 1 are inserted into respective pockets 45, the sealing station S6, and a transfer station S18 where the full, sealed bottles 1 are extracted from the pockets 45.

The conveyor system 7 comprises a transfer conveyor 46 that is provided with a horizontal drum 47 mounted so that it can rotate about a vertical rotation axis 48 and equipped with a plurality of peripheral pockets 49 each of which is designed to house a full bottle 1. The rotation of the horizontal drum 47 about the rotation axis 48 cyclically moves each pocket 49 along a circular, horizontal path between the transfer station S18 where the full bottles 1 are inserted into respective pockets 49, the rejection station S7 where the full, faulty bottles 1 are eliminated from the processing path, and a transfer station S19 where the full bottles 1 are extracted from the pockets 49.

The conveyor system 7 comprises a rejection conveyor 50 of the linear kind that receives the full bottles 1 in the rejection station S7 from the pockets 49 of the transfer conveyor 46 and moves the full bottles 1 along a linear, horizontal path towards a container that collects the full bottles 1 that are rejected. The rejection conveyor 50 could consist of a simple static channel (i.e. without any moving parts) along which the bottles 1 are pushed as new bottles 1 enter the rejection conveyor 50 in the rejection station S7.

The conveyor system 7 comprises a transfer conveyor 51 of the linear kind that receives the full bottles 1 at the transfer station S19 from the pockets 49 of the transfer conveyor 46 and moves the full bottles 1 along a linear, horizontal path towards a transfer station S20 (illustrated in Figure 2) where the full bottles 1 leave the transfer conveyor 51. The transfer conveyor 51 could consist of a simple static channel (i.e. without any moving parts) along which the bottles 1 are pushed as new bottles 1 enter the transfer conveyor 51 at the transfer station S19.

As illustrated in Figure 2, the conveyor system 7 comprises an outlet conveyor 52 that constitutes the outlet of the filling machine 6 and is provided with a horizontal drum 53 mounted so that it can rotate about a vertical rotation axis 54. At the transfer station S20, the full bottles 1 enter the drum 53 and at an outlet station S21, the bottles 1 exit the drum 53 and leave the filling machine 6.

Although each moveable plate 24 carried by a slide 23 is provided with two pockets 25 beside each other, the rotatory insertion conveyor 17 is designed to feed one empty bottle 1 at a time into a respective pocket 25 carried by a slide 23. Similarly, although each moveable plate 24 carried by a slide 23 is provided with two pockets 25 beside each other, the rotatory removal conveyor 29 is designed to remove one full bottle 1 at a time from a respective pocket 25 carried by a slide 23.

According to a preferred embodiment illustrated in Figure 2, the filling machine 6 comprises two linear feeding conveyors 56 that feed, in parallel, the caps 2 to the closing station S4; each feeding conveyor 56 receives the caps 2 from a respective rotatory feeder 57 that centrally receives, in turn, a mass of caps 2 jumbled together and is designed to order the caps 2 in a linear succession that is inserted in an inlet of the feeding conveyors 56.

In the embodiment illustrated in the attached figures, each slide 23 supports a pair of pockets 25 beside one another (i.e. each moveable plate 24 mounted on a slide 23 supports a pair of pockets 25 beside one another). According to other embodiments not illustrated, each slide 23 supports a single pocket 25 or more than two pockets beside one another (i.e. each moveable plate 24 mounted on a slide 23 supports just one pocket 25 or more than two pockets 25 beside one another).

In the embodiment illustrated in the attached figures, each station S1-S4 is designed to operate at the same time as the pockets 25 of three slides 23 beside each other, or each station S1-S4 is designed to operate at the same time as six bottles 1 carried by six pockets 25 of three slides 23 beside each other. According to several embodiments not illustrated, each station S1-S4 is designed to operate at the same time as the pockets 25 of two/four/five... slides 23 beside each other, or each station S1-S4 is designed to operate at the same time as two/four/eight/ten... bottles 1 carried by two/four/eight/ten... pockets 25 of two/four/five slides 23 beside each other.

According to other embodiments not illustrated, just the labelling station S5 could be absent, just the sealing station S6 could be absent, or both the stations S5 and S6 could be absent. In these embodiments, one or more conveyors 33, 37, 48, 42, 46 could be absent; as a result, in one possible embodiment the rejection station S7 is arranged at the removal conveyor 29 from which the linear rejection conveyor 50 and the linear transfer conveyor 51 thus directly depart.

The filling machine 6 described above has numerous advantages.

First of all, the filling machine 6 described above is very quick, i.e. it makes it possible to reach high hourly productivity while ensuring a high quality of bottles 1 at every speed. In addition, the filling machine 6 described above makes it possible to reduce the percentage of rejections (i.e. of faulty bottles 1); this result is obtained thanks to the fact that the filling machine 6 described above ensures a very gentle processing (i.e., with accelerations and decelerations that are not too high) of the bottles 1.

The filling machine 6 described above makes it possible to reduce the space occupied and to improve accessibility for carrying out cleaning, maintenance, and format-change operations (i.e. all the parts of the filling machine 6 described above can be easily accessed by the operator).

Finally, the filling machine 6 described above is relatively easy and economical to construct, in that it is composed of structurally simple elements that have just a few movements that are easy to implement.

## Claims

1. A filling machine (6) to fill bottles (1), in particular for products of the pharmaceutical industry; the filling machine (6) comprises:
a filling conveyor (21), for moving a plurality of bottles (1) along a processing path and comprises a plurality of pockets (25), each designed to house a corresponding bottle (1);
a first weighing station (S1), which is arranged along the processing path for weighing the empty bottles (1);
a filling station (S2) along the processing path, for feeding a predetermined quantity of product (2) into each bottle (1); and
a second weighing station (S3) along the processing path, for weighing the full bottles (1);
wherein the filling conveyor (21) comprises:
an annular guide (22), which is arranged in a fixed position along the processing path;
a plurality of slides (23), each supporting at least one corresponding pocket (25) and being coupled to the guide (22) so as to freely slide along the guide (22); and
a linear electric motor (26), for moving the slides (23) carrying the pockets (25) along the processing path, the linear electric motor (26) comprising an annular stator (27), which is arranged in a fixed position along the guide (22), and a plurality of movable sliders (28), each electrically-magnetically coupled to the stator (27) so as to receive, from the stator (27), a driving force, said plurality of movable sliders (28) being rigidly connected to a corresponding slide (23);
the filling machine (6) is **characterized in that:**
at least the filling station (S2) is designed to simultaneously operate with the pockets (25) of at least two slides (23) beside one another;
the filling conveyor (21) being configured to accumulate two slides (23) upstream of the filling station (S2) placing the two slides (23) side by side and, then, to move the two slides (23) side by side through the filling station (S2);
at least the weighing stations (S1, S3) are designed to simultaneously operate with the pockets (25) of at least two slides (23) beside one another;
the filling conveyor (21) being configured to accumulate two slides (23) upstream of each weighing station (S1, S3) placing the two slides (23) side by side and, then, to move the two slides (23) side by side through the weighing station (S1, S3); and
the filling conveyor (21) being configured to maintain the group of slides (23) formed upstream of the first weighing station (S1) and to move said group of slides (23) together through the other stations (S2-S4).

2. The filling machine (6) according to claim 1, wherein:
the stator (27) of the linear electric motor (26) comprises a ferromagnetic armature having a series of slots housing windings designed to be run through by electric currents, which are variable in time, in order to generate corresponding magnetic fields of the stator (27), which are variable in time; and
each slider (28) of the linear electric motor (26) comprises a ferromagnetic armature in which there is arranged at least one permanent magnet generating a rotor magnetic field, which is constant in time and interacts with the magnetic field of the stator (27) in order to generate, for the slider (28), a driving force of electromagnetic origin.

3. The filling machine (6) according to claim 1 or 2, wherein each slide (23) supports a pair of pockets (25) beside one another.

4. The filling machine (6) according to claim 3 and comprising:
a rotary insertion conveyor (17), which rotates around a first vertical rotation axis (19) and is designed to feed one bottle (1) at a time to a respective pocket (25) carried by a slide (23); and
a rotary pick-up conveyor (29), which rotates around a second vertical rotation axis (31) and is designed to pick up one bottle (1) at a time from a respective pocket (25) carried by a slide (23).

5. The filling machine (6) according to one of the claims from 1 to 4 and comprising a closing station (S4), which is arranged along the processing path for providing each bottle (1) with a respective cap (2).

6. The filling machine (6) according to claim 5 and comprising at least two feeding conveyors (56), for feeding the caps (2) to the closing station (S4) in parallel.

7. The filling machine (6) according to one of the claims from 1 to 6 and comprising a rejection station (S7), which is arranged downstream of the filling station (S2) for eliminating faulty bottles (1).

8. The filling machine (6) according to claim 7 and comprising:
a first transfer conveyor (46), along which the rejection station (S7) is arranged;
a second transfer conveyor (51), for receiving the bottles (1) from the first transfer conveyor (46); and
a rejection conveyor (50), for receiving the bottles (1) from the first transfer conveyor (46) alternatively to the second transfer conveyor (51).

9. The filling machine (6) according to claim 8, wherein:
the first transfer conveyor (46) is a rotary conveyor; and
the second transfer conveyor (51) and the rejection conveyor (50) are linear conveyors.

## Patentansprüche

1. Abfüllmaschine (6), um Flaschen (1) zu füllen, insbesondere für Produkte der Pharmaindustrie; wobei die Abfüllmaschine (6) umfasst:
ein Abfüllförderband (21), um mehrere Flaschen (1) entlang eines Verarbeitungsweges zu bewegen, das mehrere Fächer (25) aufweist, die jeweils ausgelegt sind, eine entsprechende Flasche (1) aufzunehmen;
eine erste Wiegestation (S1), die entlang des Verarbeitungsweges angeordnet ist, um die leeren Flaschen (1) zu wiegen;
eine Abfüllstation (S2) entlang des Verarbeitungsweges, um in jede Flasche (1) eine vorgegebene Menge eines Produktes (2) zuzuführen; und
eine zweite Wiegestation (S3) entlang des Verarbeitungsweges, um die vollen Flaschen (1) zu wiegen;
wobei das Abfüllförderband (21) umfasst:
eine ringförmige Führung (22), die in einer festen Position entlang des Verarbeitungsweges angeordnet ist;
mehrere Schlitten (23), die jeweils mindestens ein entsprechendes Fach (25) tragen und an die Führung (22) gekoppelt sind, um frei entlang der Führung (22) zu gleiten; und
einen elektrischen Linearmotor (26), um die Schlitten (23), die die Fächer (25) tragen, entlang des Verarbeitungsweges zu bewegen, wobei der elektrische Linearmotor (26) umfasst:
einen ringförmigen Stator (27), der an einer festen Position entlang der Führung (22) angeordnet ist, und mehrere bewegliche Gleiter (28), die jeweils elektromagnetisch an den Stator (27) gekoppelt sind, um von dem Stator (27) eine Antriebskraft zu empfangen, wobei die mehreren beweglichen Gleiter (28) starr mit einem entsprechenden Schlitten (23) verbunden sind;
wobei die Abfüllmaschine (6) **dadurch gekennzeichnet ist, dass:**
zumindest die Abfüllstation (S2) ausgelegt ist, gleichzeitig mit den Fächern (25) mindestens zweier Schlitten (23) nebeneinander zu arbeiten;
das Abfüllförderband (21) konfiguriert ist, der Abfüllstation (S2) vorgelagert zwei Schlitten (23) anzusammeln, indem sie die beiden Schlitten (23) nebeneinander anordnet, und dann die beiden Schlitten (23) nebeneinander durch die Abfüllstation (S2) zu bewegen;
zumindest die Wiegestationen (S1, S3) ausgelegt sind, gleichzeitig mit den Fächern (25) mindestens zweier Schlitten (23) nebeneinander zu arbeiten;
das Abfüllförderband (21) konfiguriert ist, jeder Wiegestation (S1, S3) vorgelagert zwei Schlitten (23) anzusammeln, indem sie die beiden Schlitten (23) nebeneinander setzt, und dann die beiden Schlitten (23) nebeneinander durch die Wiegestation (S1, S3) zu bewegen; und
das Abfüllförderband (21) konfiguriert ist, die Gruppe von Schlitten (23), die der ersten Wiegestation (S1) vorgelagert gebildet wird, beizubehalten und die Gruppe von Schlitten (23) zusammen durch die anderen Stationen (S2-S4) zu bewegen.

2. Abfüllmaschine (6) nach Anspruch 1, wobei:
der Stator (27) des elektrischen Linearmotors (26) einen ferromagnetischen Anker umfasst, der eine Reihe von Schlitzen besitzt, die Wicklungen aufnehmen, die so ausgelegt sind, dass elektrische Ströme durch sie fließen, die zeitlich variabel sind, um entsprechende magnetische Felder des Stators (27) zu erzeugen, die zeitlich variabel sind; und
jeder Gleiter (28) des elektrischen Linearmotors (26) einen ferromagnetischen Anker umfasst, in dem mindestens ein Permanentmagnet angeordnet ist, der ein magnetisches Rotorfeld erzeugt, das zeitlich konstant ist und mit dem magnetischen Feld des Stators (27) interagiert, um für den Gleiter (28) eine Antriebskraft elektromagnetischen Ursprungs zu erzeugen.

3. Abfüllmaschine (6) nach Anspruch 1 oder 2, wobei jeder Schlitten (23) ein Paar Fächer (25) nebeneinander trägt.

4. Abfüllmaschine (6) nach Anspruch 3 und umfassend:
ein drehbares Einführförderband (17), das sich um eine erste vertikale Drehachse (19) dreht und ausgelegt ist, zu einem Zeitpunkt eine Flasche (1) in ein entsprechendes Fach (25), das von einem Schlitten (23) getragen wird, einzuführen; und
ein drehbares Aufnahmeförderband (29), das sich um eine zweite vertikale Drehachse (31) dreht und ausgelegt ist, zu einem Zeitpunkt eine Flasche (1) von einem jeweiligen Fach (25), das von einem Schlitten (23) getragen wird, aufzunehmen.

5. Abfüllmaschine (6) nach einem der Ansprüche 1 bis 4 und umfassend eine Verschlussstation (S4), die entlang des Verarbeitungsweges angeordnet ist, um jede Flasche (1) mit einem jeweiligen Verschluss (2) zu versorgen.

6. Abfüllmaschine (6) nach Anspruch 5 und umfassend mindestens zwei Zuführförderbänder (56), um die Verschlüsse (2) der Verschlussstation (S4) parallel zuzuführen.

7. Abfüllmaschine (6) nach einem der Ansprüche von 1 bis 6 und umfassend eine Zurückweisungsstation (S7), die der Abfüllstation (S2) nachgelagert angeordnet ist, um fehlerhafte Flaschen (1) auszusondern.

8. Abfüllmaschine (6) nach Anspruch 7 und umfassend:
ein erstes Umladeförderband (46), entlang dessen die Zurückweisungsstation (S7) angeordnet ist;
ein zweites Umladeförderband (51), um die Flaschen (1) von dem ersten Umladeförderband (46) zu empfangen; und
ein Zurückweisungsförderband (50), um die Flaschen (1) von dem ersten Umladeförderband (46) alternativ zu dem zweiten Umladeförderband (51) zu empfangen.

9. Abfüllmaschine (6) nach Anspruch 8, wobei:
das erste Umladeförderband (46) ein drehbares Förderband ist; und
das zweite Umladeförderband (51) und das Zurückweisungsförderband (50) lineare Förderbänder sind.

## Revendications

1. Machine de remplissage (6) pour remplir des bouteilles (1), en particulier pour des produits de l'industrie pharmaceutique ; la machine de remplissage (6) comprend :
un convoyeur de remplissage (21), pour déplacer une pluralité de bouteilles (1) le long d'un trajet de traitement et comprend une pluralité de poches (25), chacune conçue pour loger une bouteille (1) correspondante ;
une première station de pesage (S1), qui est agencée le long du trajet de traitement pour peser les bouteilles (1) vides ;
une station de remplissage (S2) le long du trajet de traitement, pour introduire une quantité prédéterminée de produit (2) dans chaque bouteille (1) ; et
une seconde station de pesage (S3) le long du trajet de traitement, pour peser les bouteilles (1) pleines ;
dans lequel le convoyeur de remplissage (21) comprend :
un guide annulaire (22), qui est agencé dans une position fixe le long du trajet de traitement ;
une pluralité de glissières (23), chacune supportant au moins une poche (25) correspondante et étant couplée au guide (22) de manière à glisser librement le long du guide (22) ; et
un moteur électrique linéaire (26), pour déplacer les glissières (23) portant les poches (25) le long du trajet de traitement, le moteur électrique linéaire (26) comprenant un stator annulaire (27), qui est agencé dans une position fixe le long du guide (22), et une pluralité de coulisseaux (28) mobiles, chacun couplé électro-magnétiquement au stator (27) de manière à recevoir, du stator (27), une force motrice, ladite pluralité de coulisseaux (28) mobiles étant reliés rigidement à une glissière (23) correspondante ;
la machine de remplissage (6) est **caractérisée en ce que** :
au moins la station de remplissage (S2) est conçue pour fonctionner simultanément avec les poches (25) d'au moins deux glissières (23) l'une à côté de l'autre ;
le convoyeur de remplissage (21) étant configuré pour accumuler deux glissières (23) en amont de la station de remplissage (S2) en plaçant les deux glissières (23) côte à côte et, ensuite, pour déplacer les deux glissières (23) côte à côte à travers la station de remplissage (S2) ;
au moins les stations de pesage (S1, S3) sont conçues pour fonctionner simultanément avec les poches (25) d'au moins deux glissières (23) l'une à côté de l'autre ;
le convoyeur de remplissage (21) étant configuré pour accumuler deux glissières (23) en amont de chaque station de pesage (S1, S3) en plaçant les deux glissières (23) côte à côte et, ensuite, pour déplacer les deux glissières (23) côte à côte à travers la station de pesage (S1, S3) ; et
le convoyeur de remplissage (21) étant configuré pour maintenir le groupe de glissières (23) formé en amont de la première station de pesage (S1) et pour déplacer ledit groupe de glissières (23) ensemble à travers les autres stations (S2-S4).

2. Machine de remplissage (6) selon la revendication 1, dans laquelle :
le stator (27) du moteur électrique linéaire (26) comprend un induit ferromagnétique présentant une série de fentes logeant des enroulements conçus pour être traversés par des courants électriques, qui sont variables dans le temps, afin de générer des champs magnétiques correspondants du stator (27), qui sont variables dans le temps ; et
chaque coulisseau (28) du moteur électrique linéaire (26) comprend un induit ferromagnétique dans lequel est agencé au moins un aimant permanent générant un champ magnétique de rotor, qui est constant dans le temps et interagit avec le champ magnétique du stator (27) afin de générer, pour le coulisseau (28), une force motrice d'origine électromagnétique.

3. Machine de remplissage (6) selon la revendication 1 ou 2, dans laquelle chaque glissière (23) supporte une paire de poches (25) l'une à côté de l'autre.

4. Machine de remplissage (6) selon la revendication 3 et comprenant :
un convoyeur d'insertion rotatif (17), qui tourne autour d'un premier axe de rotation vertical (19) et est conçu pour introduire une bouteille (1) à la fois dans une poche (25) respective portée par une glissière (23) ; et
un convoyeur de prélèvement rotatif (29) qui tourne autour d'un second axe de rotation vertical (31) et est conçu pour prélever une bouteille (1) à la fois d'une poche (25) respective portée par une glissière (23).

5. Machine de remplissage (6) selon l'une des revendications 1 à 4 et comprenant une station de fermeture (S4), qui est agencée le long du trajet de traitement pour pourvoir chaque bouteille (1) d'un bouchon (2) respectif.

6. Machine de remplissage (6) selon la revendication 5 et comprenant au moins deux convoyeurs d'acheminement (56), pour acheminer en parallèle les bouchons (2) vers la station de fermeture (S4).

7. Machine de remplissage (6) selon l'une des revendications 1 à 6 et comprenant une station de rejet (S7), qui est agencée en aval de la station de remplissage (S2) pour éliminer les bouteilles (1) défectueuses.

8. Machine de remplissage (6) selon la revendication 7 et comprenant :
un premier convoyeur de transfert (46), le long duquel la station de rejet (S7) est agencée ;
un second convoyeur de transfert (51), pour recevoir les bouteilles (1) du premier convoyeur de transfert (46) ; et
un convoyeur de rejet (50), pour recevoir les bouteilles (1) du premier convoyeur de transfert (46) en alternative au second convoyeur de transfert (51).

9. Machine de remplissage (6) selon la revendication 8, dans laquelle :
le premier convoyeur de transfert (46) est un convoyeur rotatif ; et
le second convoyeur de transfert (51) et le convoyeur de rejet (50) sont des convoyeurs linéaires.
